# EUROPÄISCHE PATENTSCHRIFT

(11) **EP 0 788 919 B1**
(45) Veröffentlichungstag und Bekanntmachung des Hinweises auf die Patenterteilung: **02.11.2000**
(21) Anmeldenummer: 96110115.1
(22) Anmeldetag: 22.06.1996
(51) Int. Cl.: B60K 26/02, G05G 1/14

(54) **Fahrpedaleinheit für Fahrzeuge**
Accelerator pedal unit for vehicles
Ensemble de pédale d'accélérateur pour véhicules

(30) Priorität: 29.08.1995 DE 19531737
(43) Veröffentlichungstag der Anmeldung: 13.08.1997
(73) Patentinhaber: DaimlerChrysler AG, 70567 Stuttgart (DE)
(72) Erfinder: Papenhagen, Dieter, 71334 Waiblingen (DE); Löchle, Manfred, 70329 Stuttgart (DE); Meyer, Thorsten, 70736 Fellbach (DE)

(56) Entgegenhaltungen:
- EP-A- 0 141 947
- EP-A- 0 430 600
- WO-A-94/29584
- DE-A- 2 815 769
- DE-U- 9 409 892
- PATENT ABSTRACTS OF JAPAN vol. 018, no. 479 (M-1669), 7.September 1994 & JP 06 156110 A (TOYOTA AUTOM LOOM WORKS LTD), 3.Juni 1994,

## Beschreibung

Die Erfindung betrifft eine Fahrpedaleinheit für Fahrzeuge nach der im Oberbegriff von Anspruch 1 und 7 näher definierten Art.

Eine Fahrpedaleinheit dieser Art ist aus der EP 0 430 600 B1 bekannt. Dabei wirkt eine spiralförmige Rückstellfeder auf einen Pedalhebel, um diesen in Leerlaufstellung zu bringen.

Ähnliche Fahrpedaleinheiten sind auch aus der DE-OS 28 15 769 und der DE-OS 27 28 787 bekannt. Dabei ist der Pedalhebel an einer Fahrzeugwand, die eine Halterung mit Lagerbohrungen aufweist, gelagert.

Diese bekannten Fahrpedaleinheiten sind jedoch relativ kompliziert aus einer Vielzahl von Bauteilen aufgebaut. Aus diesem Grunde muß die Fahrpedaleinheit auch während des Zusammenbaus des Fahrzeugs aus mehreren Einzelteilen bei der Montage der Einheit vor Ort zusammenmontiert werden.

Aus der EP 0 141 947 A2 ist ein elektronisches Pedal bekannt, bei dem ein elektrisches Signal proportional zur Bewegung des Pedals erzeugt wird. Dabei sind spiralförmige Federn vorgesehen, die das Pedal in seine Grundstellung bringen.

Weiterhin ist aus der WO 94/29584 eine Fahrpedaleinheit bekannt, bei der die Lagerstelle zwei mit Lagerbohrungen versehene Schenkel eines separaten Halters aufweist und die Rückzugsfeder an einem Ende an dem Pedalhebel und am anderen Ende an dem Halter anliegt.

Nachteilig an diesen Lösungen ist jedoch, daß dabei ein sehr großer Montageaufwand notwendig ist und insbesondere, daß die Befestigung der Feder an dem starren Halter problematisch und technisch unzureichend ist.

Der vorliegenden Erfindung liegt daher die Aufgabe zugrunde, eine Fahrpedaleinheit zu schaffen, die bei Vermeidung der erwähnten Nachteile bekannter Lösungen gegenüber dem Stand der Technik hinsichtlich einer rationellen Serienfertigung, insbesondere einer weitgehenden Vormontage, verbessert ist.

Erfindungsgemäß wird diese Aufgabe durch die im kennzeichnenden Teil der unabhängigen Ansprüche 1 und 7 genannten Merkmale gelöst.

Durch die erfindungsgemäße Befestigung der auf einen Pedalhebel wirkenden Rückzugsfeder(n) ist vorteilhafterweise eine Vormontage der gesamten Fahrpedaleinheit möglich.

Durch die Ausbildung der Querwand als Schieber, der in eine schubladenartige Führung des Halters einschiebbar ist, ergibt sich der Vorteil, daß die Vormontage und der Einbau der beiden Rückzugsfedern vereinfacht wird.

Eine weitere sehr vorteilhafte Lösung zur einfachen Vormontage stellt die Befestigung der Rückzugsfeder(n) gemäß Anspruch 7 dar, wobei zwischen den Schenkeln und der Querwand Schlitze zur Durchführung von mit Haken versehenen Federdrähten von als Spiralfeder ausgebildeten Rückzugsfedern vorgesehen sind.

Da der Halter eine separate, vom Fahrzeug unabhängige, Einheit darstellt, ist es lediglich erforderlich, diesen für einen Einbau in ein Fahrzeug an einer vorbestimmten Stelle im Fahrzeug, was im allgemeinen die Spritzwand ist, zu befestigen. Mit dieser Befestigung ist dann die gesamte Fahrpedaleinheit funktionsfähig, da auch die Rückzugsfedern in der vormontierten Einheit in ihrer richtigen Position liegen können. Irgendwelche umständliche Einbauarbeiten für eine oder mehrere Rückzugsfedern und deren Vorspannung können auf diese Weise entfallen.

Vorteilhafte Weiterbildungen und Ausgestaltungen der Erfindung ergeben sich aus den Unteransprüchen und aus dem prinzipmäßig nachfolgend anhand der Zeichnung beschriebenen Ausführungsbeispiel.

Es zeigt:
- Fig. 1: die erfindungsgemäße Fahrpedaleinheit in einer Explosionsdarstellung;
- Fig. 2: eine Seitenansicht der Fahrpedaleinheit nach der Fig. 1 teilweise im Schnitt;
- Fig. 3: eine vergrößerte perspektivische Darstellung des Halters mit den Verbindungsteilen vor der Verbindung mit dem Pedalhebel;
- Fig. 4: eine Draufsicht auf den Halter mit einer zweiten Befestigungsart der Rückzugsfeder in dem Halter; und
- Fig. 5: einen Schnitt nach der Linie V-V der Figur 4.

Ein Pedal 1 ist in bekannter Weise über eine Steckverbindung 2 mit einem Pedalhebel 3 verbunden. Der Pedalhebel 3 ist über ein Lagerauge 4 auf der von der Steckverbindung 2 abgewandten Seite schwenkbar mit einem Halter 5 verbunden. Auf der von der Lagerstelle des Halters 5 abgewandten Seite kann das Pedal 1 noch über ein gelenkiges Verbindungsteil 6 mit dem Halter 5 verbunden sein. In einem Teilbereich der äußeren Umfangswand des Lagerauges 4 befinden sich zwei parallel nebeneinander angeordnete Teilumfangsschlitze 8. Durch die Teilumfangsschlitze 8 werden Schlingen bzw. Schlaufen 9 von zwei Seilzügen 10 geschoben. Die mit Nippeln 7 versehenen Enden der Seilzüge 10 werden in entsprechend angepaßte Aussparungen 11 des Lagerauges 4 eingesetzt.

Das Lagerauge 4 ist auf seiner inneren Umfangswand bzw. seiner Bohrung mit zwei sich wenigstens über einen Teilbereich erstreckenden Umfangsnuten 12 versehen, die mit den Teilumfangsschlitzen 8 fluchten. In die Umfangsnuten 12 werden die beiden Schlaufen 9 der beiden Seilzüge 10 eingelegt, die aufgrund ihrer Eigenspannung in den Umfangsnuten 12 liegen bleiben. Die beiden wieder aus den Teilumfangsschlitzen 8 herausgeführten Teile der beiden Seilzüge 10 werden in Rillen über einen rückwärtigen Teil des Lagerauges 4 geführt, der in Form eines Nockens 13 ausgebildet ist.

Zur Montage und damit zur Herstellung einer Fahrpedaleinheit wird in das Lagerauge 4 nach einem vorangegangenen Einlegen der Schlaufen 9 der Seilzüge 10 eine Lagerhülse 14 eingeschoben. Die Lagerhülse 14 besitzt eine axiale Länge, die etwas größer ist als die Breite des Lagerauges 4. Nach dem Einschieben der Lagerhülse 14 wird diese damit unter einer Klemmwirkung und damit spielfrei zwischen zwei Schenkeln 15 des wenigstens über einen Teilbereich im Querschnitt eine U-Form aufweisenden Halters 5 geklemmt. Damit ist die Lagerhülse 14 feststehend und sie wirkt als eine Art Reibbuchse zwischen den Seilschlaufen 9 und der inneren Umfangswand bzw. der Lagerbohrung des Pedalhebels 3.

Zur Montage wird anschließend in die sich gegenüberliegenden Lagerbohrungen 16 in den Schenkeln 15 und durch die Lagerhülse 14 hindurch eine Gleitbuchse 17 geschoben.

Für eine genaue Positionierung eines Fensters 18 in der Lagerhülse 14, durch das ein Mitnahmestift 19 gesteckt ist, ist die Lagerhülse 14 auf einer Stirnseite mit einer rahmenartigen Erweiterung 29 versehen, damit bei der Montage der Lagerhülse 14 nebst Pedalhebel 3 das Fenster 18 die für die Montage des Mitnahmestiftes 19 geeignete Position erhält.

Damit die gewünschte Position beibehalten und eine geforderte Zuordnung eingehalten wird, ist die Gleitbuchse 17 auf ihrem Umfang mit aus dieser herausragenden Lappen 20 und Nasen 32 versehen, wobei die Lappen 20 an ihren vorderen Enden zusätzlich noch mit Rastnasen 20A versehen sind.

An die Größe der Nasen 32 angepaßte Aussparungen 21 und 31A befinden sich in den Lagerbohrungen 16 und in der inneren Umfangswand der Lagerhülse 14. Wird für eine Verbindung des Pedalhebels 3 mit dem Halter bei der Montage die Gleitbuchse 17 eingeschoben, so kann dies nur in einer bestimmten Position erfolgen, wobei die Lappen 20 in die entsprechenden, asymmetrisch angeordneten Nuten 31 der Lagerhülse 14 in Form von Rastverschlüssen einrasten. Im montierten Zustand kommen die Nasen 32 in den Aussparungen 31A der Lagerhülse 14 und in den Aussparungen 21 der Lagerbohrung 16 zum Ruhen. Auf diese Weise sind sowohl die Lagerhülse 14 als auch die Gleitbuchse 17 drehfest mit dem Halter 5 verbunden.

Die von den freien Enden mit den Nippeln 7 abgewandten Enden der Seilzüge 10 sind mit spiralförmigen Rückzugsfedern 22 verbunden. An ihren Enden weisen die Rückzugsfedern Haken 23 auf, über die sie unter einer entsprechenden Vorspannung auf eine nachfolgend zu beschreibende Weise in den Halter 5 eingehängt werden.

In eine Bohrung 24 des Halters 5 wird beim Automatikfahrzeug ein Kick-Down-Schalter 25 eingesetzt, während sich bei einem Fahrzeug mit einem Schaltgetriebe in diesem Bereich ein fester Anschlag befindet. Auf diese Weise ist die Fahrpedaleinheit sowohl für Fahrzeuge mit einem Schaltgetriebe als auch mit einem Automatikgetriebe geeignet.

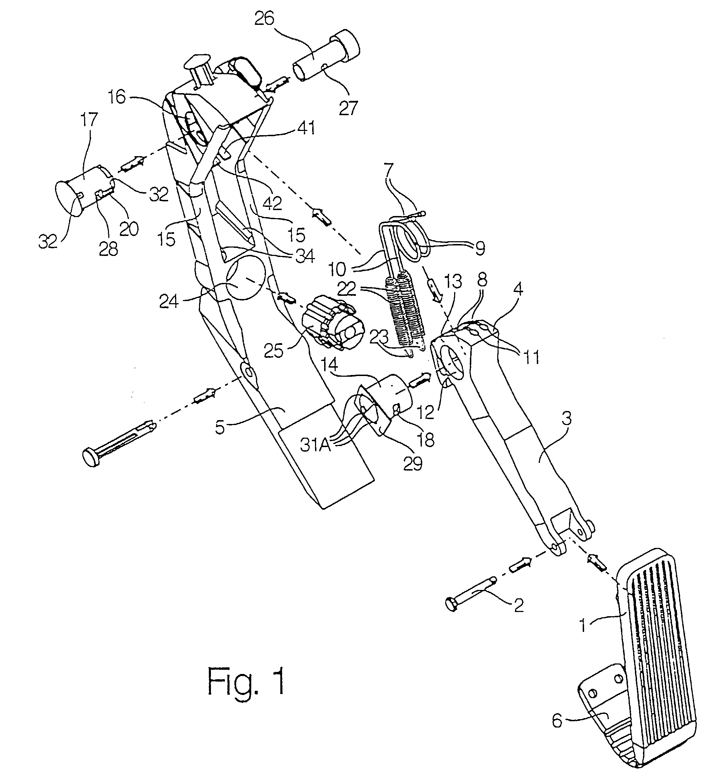

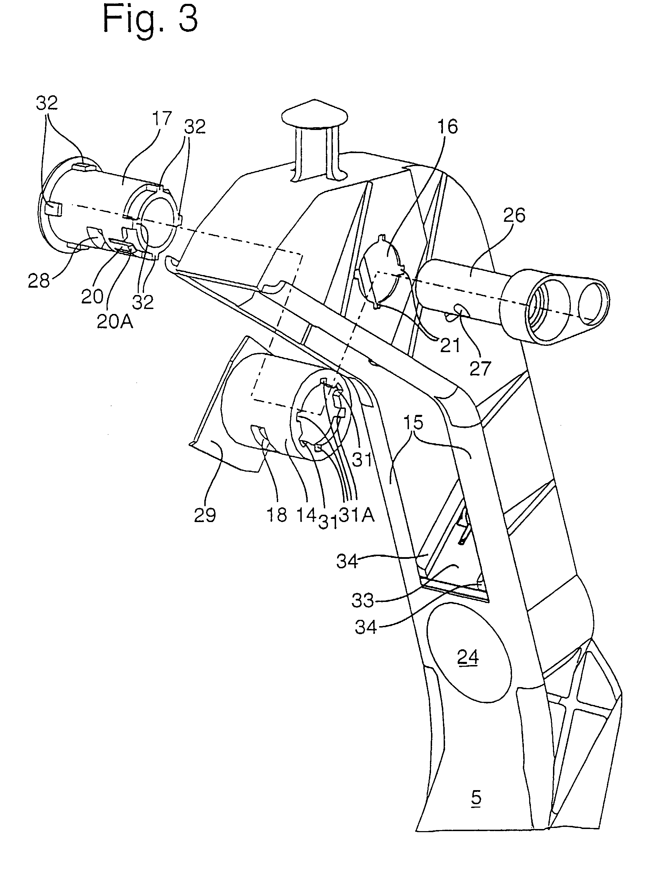

Wie aus den Fig. 1 bis 3 ersichtlich ist, ist die Fahrpedaleinheit nach dem Ausführungsbeispiel für eine elektronische bzw. elektrische Verbindung mit dem Fahrzeugmotor vorgesehen. Zu diesem Zweck wird in die Gleitbuchse 17 von der von der Einschubseite der Gleitbuchse 17 abgewandten Seite aus eine Geberwelle 26 mit einem - nicht dargestellten - Ringmagnet eingeschoben. Die Geberwelle 26 meldet in bekannter Weise eine entsprechende Verdrehung und damit die jeweilige Stellung des mit der Geberwelle 26 verbundenen Pedales 1 elektrisch bzw. elektronisch an einen Fahrzeugmotor zu dessen Steuerung weiter. Hierzu kann die Geberwelle 26 als Potentiometerantriebswelle oder auch als Hallgeberantriebswelle in bekannter Weise ausgebildet sein.

Wie erwähnt dient zur Verbindung mit dem Pedalhebel 3 der Mitnahmestift 19. Dieser Stift kann zum Beispiel als Gewindestift ausgebildet sein, der in eine entsprechende Gewindebohrung 27 in die Umfangswand der Geberwelle 26 eingeschraubt wird. Ebenso kann jedoch auch ein einfacher Stift vorgesehen sein, der in die Geberwelle 26 klipsartig einrastet.

Das andere Ende des Mitnahmestiftes 19 ist in einer Bohrung des Pedalhebels 3 fest angeordnet.

Zur Durchführung des Mitnahmestiftes 19 und damit zur drehfesten Verbindung mit dem Pedalhebel 3 ist auch die Gleitbuchse 17 mit einem Fenster 28 zu versehen, das mit dem Fenster 18 in der Lagerhülse fluchtet. Die Größe der beiden Fenster 18 und 28 ist dabei so zu wählen, daß sich der Mitnahmestift 19 und damit der Pedalhebel 3 frei zwischen einem oberen Anschlag, der den Leerlaufanschlag darstellt, und einem unteren Anschlag, der den Vollgasanschlag darstellt, bewegen kann.

Die Gleitbuchse 17 hat eine Doppelfunktion. Zum einen dient sie zur Positionierung und als Verschlußbuchse für die Lagerhülse 14 und zum anderen als Gleitbuchse für die Geberwelle 26.

Die beiden Rückzugsfedern 22 wirken in Verbindung mit den Seilzügen 10 bzw. den beiden Schlaufen 9 der Seilzüge 10 als Seilreibung und geben damit dem Fahrer beim Gasgeben ein entsprechendes Fahrgefühl, da ja die sonst übliche mechanische Seilzugverbindung zu dem Fahrzeugmotor fehlt.

Der Nocken 13 weist in seinem Verlauf unterschiedliche Radien auf, wodurch sich in Abhängigkeit von der Stellung des Pedalhebels 3 unterschiedliche Hebelarme für die Seilzüge 10 mit einem Drehachsenmittelpunkt von Pedalhebel 3 und Halter 5 ergeben. Auf diese Weise läßt sich ein fahrgeschwindigkeits- bzw. fahrpedalabhängiges Gefühl für einen Fahrer erreichen.

Nachfolgend sind zwei Befestigungsmöglichkeiten der beiden Rückzugsfedern 22 in dem Halter 5 an einer Querwand erläutert.

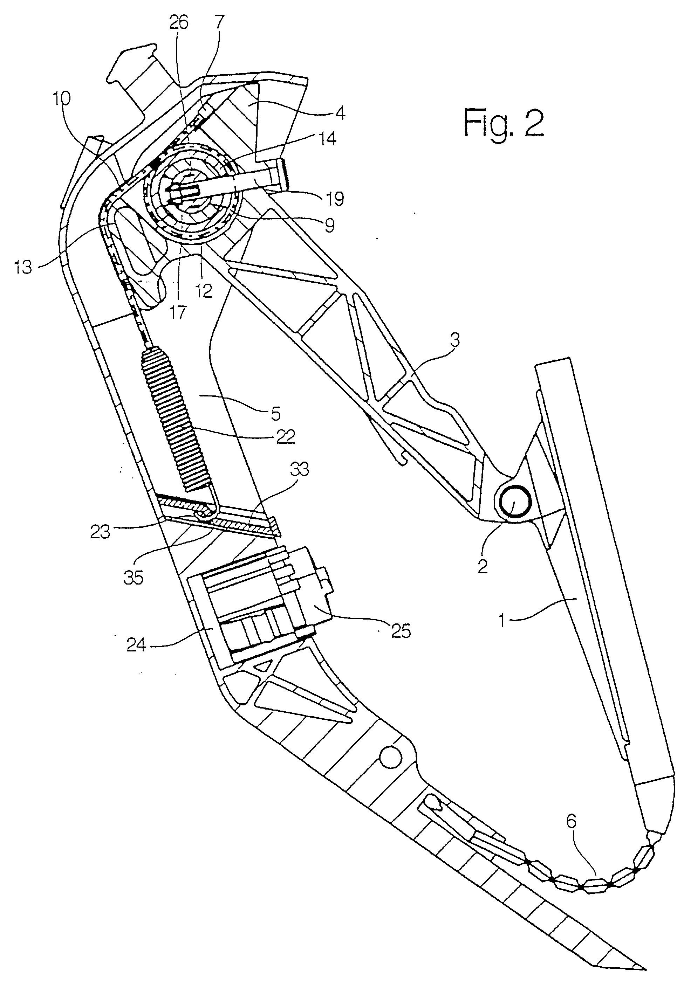

Gemäß Fig. 2 ist die Querwand als separater Schieber 33 ausgebildet, der schubladenartig in Führungen 34 in den beiden Schenkeln 15 des Halters 5 eingeschoben ist. Die beiden Rückzugsfedern 22 sind dabei mit ihren Haken 23 in Bohrungen 35 des im Querschnitt bzw. in Seitenansicht gesehen hierzu leicht Z-förmigen Schiebers 33 eingehängt.

Durch den Schieber 33 wird eine einfache Vormontage und ein Einbau der beiden Rückzugsfedern 22 erreicht. Zur Montage bzw. vor einer Verbindung mit dem Halter 5 und nach einem Einlegen der beiden Schlaufen 9 der Seilzüge 10 in die Umfangsnuten 12 der Lagerbohrung des Lagerauges 4 werden die Haken 23 der Rückzugsfedern 22 in den Schieber 33 eingehängt. Zu diesem Zeitpunkt ist der Schieber 33 in einen Haken 36 des Pedalhebels 3, der sich auf seiner dem Halter 5 zugewandten Seite befindet, eingehängt. Hierzu weist der Schieber 33 auf der von der Einschubrichtung in die Führung 34 abgewandten Seite eine entsprechende Öse bzw. eine Bohrung auf, über die der Schieber 33 in den Haken 36 eingehängt ist. Statt einer Öse kann der Schieber 33 auch mit einem Gegenhaken 37 versehen sein, der den Haken 36 hintergreift.

Dies bedeutet, die Seilzüge 10 und die Rückzugsfedern 22 sind damit in einer vormontierten Stellung und nach einer Verbindung des Pedalhebels 3 mit dem Halter 5 und nach einem entsprechenden Einschieben der Gleitbuchse 17 kann der Schieber 33 von dem Haken 36 gelöst und in die beiden Führungen 34 eingeschoben werden. Auf diese Weise ist dann die gesamte Pedaleinheit vormontiert.

Damit nicht die Gefahr besteht, daß unter Belastung durch die Rückzugsfedern 22 der Schieber 33 aus seinen Führungen 34 herausgezogen wird, sind die Führungen 34 derart schräg geneigt, daß sie auf der Einschubseite einen größeren Abstand von den Angriffspunkten der Rückzugsfedern 22 besitzen. Mit anderen Worten, deren Abstand von dem Drehpunkt zwischen dem Pedalhebel 3 und dem Halter 5 ist größer, so daß sich eine in Einschubrichtung ergebende Kraft einstellt, wodurch der Schieber 33 sicher positioniert ist.

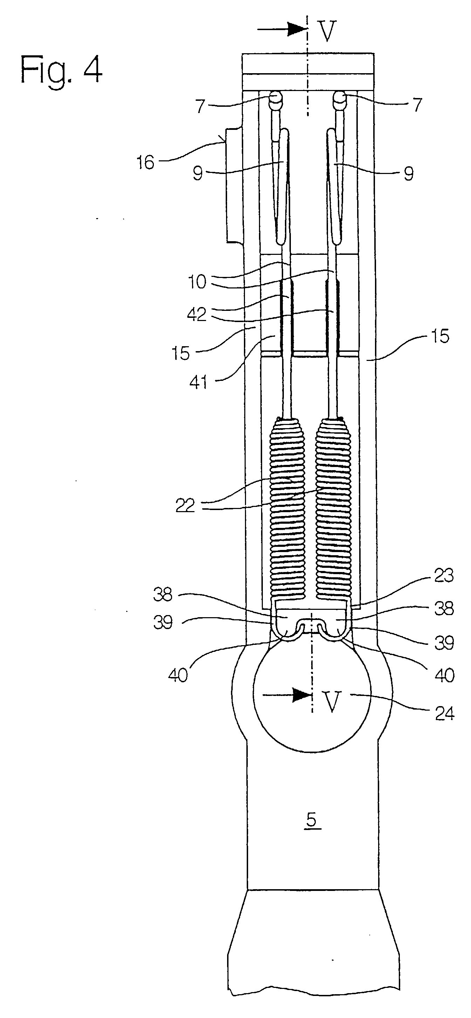

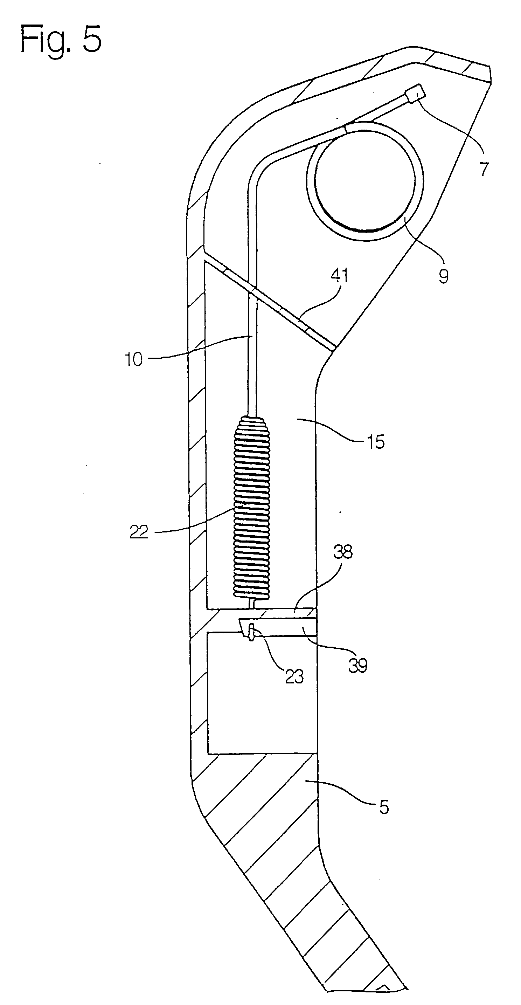

In den Fig. 4 und 5 ist eine zweite Befestigungsmöglichkeit für die beiden Rückzugsfedern 22 aufgezeigt. Wie ersichtlich, befindet sich zwischen den Schenkeln 15 eine feste bzw. mit dem Halter 5 einstückige Querwand 38, die in ihren äußeren Bereichen mit Schlitzen 39 versehen ist. Die Schlitze 39 besitzen eine Breite derart, daß Federdrähte der Haken 23 in die Schlitze 39 eingelegt werden können. Die Haken 23 der Federdrähte sind auf der Rückseite der Querwand 38 um Wülste 40 gelegt.

Aus den Fig. 4 und 5 ist weiterhin ersichtlich, daß sich zwischen den Rückzugsfedern 22 und der Lagerstelle zwischen dem Pedalhebel 3 und dem Halter 5 eine Schlitzwand 41 befindet, die sich quer zwischen den beiden Schenkeln 15 erstreckt und den Zwischenraum absperrt. Es sind lediglich zwei Schlitze 42 in der Schlitzwand 41 vorhanden, die eine derartige Breite besitzen, daß die beiden Seilzüge 10 mit Spiel durchgeführt werden können. Die Schlitzwand 41 hat die Aufgabe als Prallwand zu wirken, wenn zum Beispiel eine Rückzugsfeder 22 bricht. Durch die Schlitzwand 41 wird nämlich verhindert, daß gebrochene Federteile in den Lagerbereich gelangen und damit zu Verklemmungen und zu Störungen der Bedienung der Fahrpedaleinheit führen könnten.

Die beschriebene Erfindung ist nicht auf das vorliegende Ausführungsbeispiel beschränkt. So kann der Halter 5 beispielsweise auch mit einem hängenden Fahrpedal, also einem Fahrpedal ohne untere Verbindung zum Fahrzeugboden bzw. zum Halter 5, verbunden sein.

## Patentansprüche

1. Fahrpedaleinheit für Fahrzeuge mit einem an einem Pedalhebel befestigten Pedal, wobei der Pedalhebel auf der von dem Pedal abgewandten Seite über ein Lagerauge mit einer Lagerstelle drehbar in Lagerbohrungen gelagert ist, wobei wenigstens eine auf den Pedalhebel einwirkende Rückzugsfeder vorgesehen ist, wobei die Lagerstelle zwei mit den Lagerbohrungen versehene Schenkel eines separaten Halters aufweist und wobei die Rückzugsfeder an einem Ende direkt oder über einen Seil- oder Drahtzug an dem Pedalhebel und am anderen Ende an dem Halter befestigt ist,
**dadurch gekennzeichnet,** daß die Befestigung der Rückzugsfeder (22) an einer Querwand (33) erfolgt, die zwischen den Schenkeln (15) des Halters (5) angeordnet ist, wobei die Querwand als separater Schieber (33) ausgebildet ist, der in eine schubladenartige Führung (34) des Halters (5) einschiebbar ist.

2. Fahrpedaleinheit nach Anspruch 1,
**dadurch gekennzeichnet,** daß jeweils eine Führung (34) auf den Innenseiten der beiden Schenkel (15) angeordnet ist, und daß die Führungen (34) derart schräg geneigt sind, daß sie auf der Einschubseite einen größeren Abstand von dem Angriffspunkt der Rückzugsfeder (22) besitzen.

3. Fahrpedaleinheit nach Anspruch 1 oder 2,
**dadurch gekennzeichnet,** daß wenigstens eine Rückzugsfeder (22) in eine Öse (35) des Schiebers (33) einhängbar ist.

4. Fahrpedaleinheit nach einem der Ansprüche 1 bis 3,
**dadurch gekennzeichnet,** daß der Schieber (33) auf der von der Einschubseite abgewandten Seite mit einem Verbindungsglied (36,37) versehen ist, über das der Schieber (33) vor dessen Verbindung mit dem Halter (5) und bei eingehängter Rückzugsfeder (22) beweglich mit dem Pedalhebel (3) verbindbar ist.

5. Fahrpedaleinheit nach einem der Ansprüche 1 bis 4,
**dadurch gekennzeichnet,** daß die Rückzugsfeder (22) mit einem Seil- oder Drahtzug (10) versehen ist, dessen freies Ende im Bereich der äußeren Umfangswand des Lagerauges (4) befestigt ist, wobei der Seil- oder Drahtzug (10) von dem äußeren Umfangsbereich des Lagerauges (4) aus über einen Teilumfangsschlitz (8) in das Innere des Lagerauges (4) geführt ist, von wo aus er nach seiner Umschlingung aus dem gleichen oder einem anderen Teilumfangsschlitz (8) wieder herausgeführt und über einen Bereich des Lagerauges (4) des Pedalhebels (3) geführt ist, der als Nocken (13) ausgebildet ist, wobei der Nocken (13) eine derartige Form aufweist, daß sich bei der Überführung des Seil- oder Drahtzuges (10) über den Nocken (13) unterschiedliche Hebelarme für den Seil- oder Drahtzug (10) einstellen.

6. Fahrpedaleinheit nach einem der Ansprüche 1 bis 5,
**dadurch gekennzeichnet,** daß zwischen der Rückzugsfeder (22) und der Lagerstelle eine sich zwischen den Schenkeln (15) quer erstreckende Schlitzwand (41) angeordnet ist, durch deren Schlitze (42) der Seil- oder Drahtzug (10) geführt ist.

7. Fahrpedaleinheit für Fahrzeuge mit einem an einem Pedalhebel befestigten Pedal, wobei der Pedalhebel auf der von dem Pedal abgewandten Seite über ein Lagerauge mit einer Lagerstelle drehbar in Lagerbohrungen gelagert ist, wobei wenigstens eine auf den Pedalhebel einwirkende Rückzugsfeder vorgesehen ist, wobei die Lagerstelle zwei mit den Lagerbohrungen versehene Schenkel eines separaten Halters aufweist und wobei die Rückzugsfeder an einem Ende direkt oder über einen Seil- oder Drahtzug an dem Pedalhebel und am anderen Ende an dem Halter befestigt ist,
**dadurch gekennzeichnet,** daß die Befestigung der Rückzugsfeder (22) an einer Querwand (38) erfolgt, die zwischen den Schenkeln (15) des Halters (5) angeordnet ist, wobei zwischen den Schenkeln (15) und der Querwand (38) Schlitze (39) zur Durchführung von mit Haken versehenen Federdrähten von als Spiralfeder (22) ausgebildeten Rückzugsfedern vorgesehen sind.

8. Fahrpedaleinheit nach Anspruch 7,
**dadurch gekennzeichnet,** daß die Haken (23) der Federdrähte um Wülste (40) der Querwand (38) gelegt sind.

9. Fahrpedaleinheit nach Anspruch 7 oder 8,
**dadurch gekennzeichnet,** daß jeweils eine Führung (34) auf den Innenseiten der beiden Schenkel (15) angeordnet ist, und daß die Führungen (34) derart schräg geneigt sind, daß sie auf der Einschubseite einen größeren Abstand von dem Angriffspunkt der Rückzugsfeder (22) besitzen.

10. Fahrpedaleinheit nach einem der Ansprüche 7 bis 9,
**dadurch gekennzeichnet,** daß wenigstens eine Rückzugsfeder (22) in eine Öse (35) des Schiebers (33) einhängbar ist.

11. Fahrpedaleinheit nach einem der Ansprüche 7 bis 10,
**dadurch gekennzeichnet,** daß der Schieber (33) auf der von der Einschubseite abgewandten Seite mit einem Verbindungsglied (36,37) versehen ist, über das der Schieber (33) vor dessen Verbindung mit dem Halter (5) und bei eingehängter Rückzugsfeder (22) beweglich mit dem Pedalhebel (3) verbindbar ist.

12. Fahrpedaleinheit nach einem der Ansprüche 7 bis 11,
**dadurch gekennzeichnet,** daß die Rückzugsfeder (22) mit einem Seil- oder Drahtzug (10) versehen ist, dessen freies Ende im Bereich der äußeren Umfangswand des Lagerauges (4) befestigt ist, wobei der Seil- oder Drahtzug (10) von dem äußeren Umfangsbereich des Lagerauges (4) aus über einen Teilumfangsschlitz (8) in das Innere des Lagerauges (4) geführt ist, von wo aus er nach seiner Umschlingung aus dem gleichen oder einem anderen Teilumfangsschlitz (8) wieder herausgeführt und über einen Bereich des Lagerauges (4) des Pedalhebels (3) geführt ist, der als Nocken (13) ausgebildet ist, wobei der Nocken (13) eine derartige Form aufweist, daß sich bei der Überführung des Seil- oder Drahtzuges (10) über den Nocken (13) unterschiedliche Hebelarme für den Seil- oder Drahtzug (10) einstellen.

13. Fahrpedaleinheit nach einem der Ansprüche 7 bis 12,
**dadurch gekennzeichnet,** daß zwischen der Rückzugsfeder (22) und der Lagerstelle eine sich zwischen den Schenkeln (15) quer erstreckende Schlitzwand (41) angeordnet ist, durch deren Schlitze (42) der Seil- oder Drahtzug (10) geführt ist.

## Claims

1. Drive pedal unit for vehicles with a pedal attached to a pedal lever, whereby the pedal lever is supported, on the side facing away from the pedal, by means of a support eye with a bearing, in support borings, such that it can rotate, whereby at least one retractile spring, acting on the pedal lever, is provided, whereby the bearing has two sides, of a separate support, provided with support borings, and whereby the retractile spring is directly attached, at one end, onto the pedal lever, or is connected to the latter by means of a cable or wire line, and is attached, at the other end, to the support,
characterized in that the attachment of the retractile spring (22) occurs onto a partition (33) disposed between the side elements (15) of the support (5), whereby the partition is developed as a separate slide plate (33), which can be inserted into a drawer-like guideway (34) of the support (5).

2. Drive pedal unit in accordance with claim 1,
characterized in that, in each case, a guideway (34) is disposed on the inner sides of both side elements (15), and that the guideways (34) are inclined such that they are set further apart, from the point of contact of the retractile spring (22), on the slide-in side.

3. Drive pedal unit in accordance with claim 1 or 2,
characterized in that at least one retractile spring (22) can be suspended in an eyelet (35) of the slide plate (33).

4. Drive pedal unit in accordance with any one of claims 1 to 3,
Characterized in that the slide plate (33) is provided with a connecting link (36, 37), on the side facing away from the slide-in side, by means of which connecting link the slide plate (33) can be movably connected to the pedal lever (3) before the connection of the said slide plate to the support (5), and with the retractile spring (22) hung in place.

5. Drive pedal unit in accordance with any one of claims 1 to 4,
characterized in that the retractile spring (22) is provided with a wire or cable line (10), the free end of which is attached in the area of the outer peripheral surface of the support eye (4), whereby the wire or cable line (10) is introduced into the support eye (4) from the outer peripheral area of the support eye (4) outwards, via the partial peripheral slot (8), and from the support eye (4), having been wrapped around, is then passed back outwards and over the area of the support eye (4), of the pedal lever (3), which is developed as a cam (13), whereby the cam (13) has a form such that, when passing the wire or cable line (10) over the cam (13), different lever arms are adjusted for the wire or cable line (10).

6. Drive pedal unit in accordance with any one of claims 1 to 5,
Characterized in that a transverse slot face (41), through the slot (42) of which the wire or cable line (10) is guided, and extending between the side elements (15), is disposed between the retractile spring (22) and the bearing.

7. Drive pedal unit, for vehicles, with a pedal attached to a pedal lever, whereby the pedal lever is supported, on the side facing away from the pedal, by means of a support eye with a bearing, in support borings, such that it can rotate, whereby at least one retractile spring, acting on the pedal lever, is provided, whereby the bearing has two sides, of a separate support, provided with support borings, and whereby the retractile spring is directly attached, at one end, onto the pedal lever, or is connected to the latter by means of a cable or wire line, and is attached, at the other end, to the support,
characterized in that the retractile spring (22) is attached to a partition (38), which is disposed between the side elements (15) of the support (5), whereby slots (39) for passing through spring wires, of retractile springs developed as helical springs (22) and provided with hooks, are provided between the side elements (15) and the partition (38).

8. Drive pedal unit in accordance with claim 7,
characterized in that the hooks (23) of the spring wires are laid around elevations (40) of the partition (38).

9. Drive pedal unit in accordance with claim 7 or 8,
characterized in that, in each case, a guideway (34) is disposed on the inner sides of both side elements (15), and that the guideways (34) are inclined such that they are set further apart, from the point of contact of the retractile spring (22), on the slide-in side.

10. Drive pedal unit in accordance with any one of claims 7 to 9,
characterized in that at least one retractile spring (22) can be suspended in an eyelet (35) of the slide plate (33).

11. Drive pedal unit in accordance with any one of claims 7 to 10,
characterized in that the slide plate (33) is provided with a connecting link (36, 37), on the side facing away from the slide-in side, by means of which connecting link the slide plate (33) can be movably connected to the pedal lever (3) before the connection of the said slide plate to the support (5), and with the retractile spring (22) hung in place.

12. Drive pedal unit in accordance with any one of claims 7 to 11,
characterized in that the retractile spring (22) is provided with a wire or cable line (10), the free end of which is attached in the area of the outer peripheral surface of the support eye (4), whereby the wire or cable line (10) is introduced into the support eye (4) from the outer peripheral area of the support eye (4) outwards, via the partial peripheral slot (8), and from the support eye (4), having been wrapped around, is then passed back outwards and over the area of the support eye (4), of the pedal lever (3), which is developed as a cam (13), whereby the cam (13) has a form such that, when passing the wire or cable line (10) over the cam (13), different lever arms are adjusted for the wire or cable line (10).

13. Drive pedal unit in accordance with any one of claims 7 to 12,
Characterized in that a transverse slot face (41), through the slot (42) of which the wire or cable line (10) is guided, and extending between the side elements (15), is disposed between the retractile spring (22) and the bearing.

## Revendications

1. Ensemble de pédale d'accélérateur pour véhicules, avec une pédale, fixée sur un levier de pédale, le levier de pédale étant monté à rotation, sur le côté opposé à la pédale, de façon à pouvoir tourner dans des perçages de tourillonnement, par l'intermédiaire d'un oeillet de tourillonnement ayant un point de tourillonnement, au moins un ressort de rappel, agissant sur le levier de pédale, étant prévu, le point de tourillonnement présentant deux branches, dotées des perçages de tourillonnement, d'un support séparé et le ressort de rappel étant fixé à une extrémité, directement ou par l'intermédiaire d'un câble ou d'un fil de transmission, au levier de pédale et, à l'autre extrémité, au support,
caractérisé en ce que
la fixation du ressort de rappel (22) s'effectue sur une paroi transversale (33), disposée entre les branches (15) du support (5), la paroi transversale étant réalisée sous la forme de coulisseau (33) séparé, susceptible d'être inséré dans un guidage (34), du genre d'un tiroir, du support (5).

2. Ensemble de pédale d'accélérateur selon la revendication 1, caractérisé en ce que chaque fois un guidage (34) est disposé sur les côtés intérieurs des deux branches (15), et en ce que les guidages (34) sont inclinés obliquement de manière que, du côté insertion, ils soient plus éloignés du point d'action du ressort de rappel (22).

3. Ensemble de pédale d'accélérateur selon la revendication 1 ou 2, caractérisé en ce qu'au moins un ressort de rappel (22) est susceptible d'être accroché dans un oeillet (35) du coulisseau (33).

4. Ensemble de pédale d'accélérateur selon l'une des revendications 1 à 3, caractérisé en ce que le coulisseau (33) est muni, sur le côté opposé au côté d'introduction, d'un organe de liaison (36, 37) par l'intermédiaire duquel le coulisseau (33) est susceptible d'être relié, avant sa liaison au support (5) et lorsque le ressort de rappel (22) est accroché, de façon mobile, au levier de pédale (3).

5. Ensemble de pédale d'accélérateur selon l'une des revendications 1 à 4, caractérisé en ce que le ressort de rappel (22) est muni d'un câble ou d'un fil de transmission (10) dont l'extrémité libre est fixée dans la zone de la paroi périphérique extérieure de l'oeillet de tourillonnement (4), le câble ou le fil de transmission (10) étant guidé depuis la zone périphérique extérieure de l'oeillet de tourillonnement (4), sur une fente périphérique partielle (8) ménagée à l'intérieur de l'oeillet de tourillonnement (4) d'où, après son enlacement, il ressort de la même fente périphérique partielle (8) ou d'une autre et est guidé sur une zone de l'oeillet de tourillonnement (4) du levier de pédale (3), réalisé sous la forme de came (13), la came (13) présentant une forme telle que, lors du passage sur elle du câble ou du fil de transmission (10) sur la came (13), des bras de levier différents s'établissent pour le câble ou le fil de transmission (10).

6. Ensemble de pédale d'accélérateur selon l'une des revendications 1 à 5, caractérisé en ce qu'entre le ressort de rappel (22) et le point de tourillonnement est disposée une paroi à fentes (41) s'étendant transversalement entre les branches (15), paroi à fentes à travers les fentes (42) de laquelle le câble ou le fil de transmission (10) est guidé.

7. Ensemble de pédale d'accélérateur pour véhicules avec une pédale fixée à un levier de pédale, le levier de pédale étant monté, sur le côté opposé à la pédale, de façon à pouvoir tourner dans des perçages de tourillonnement, par l'intermédiaire d'un oeillet de tourillonnement ayant un point de tourillonnement, au moins un ressort de rappel, agissant sur le levier de pédale, étant prévu, le point de tourillonnement présentant deux branches, munies des perçages de tourillonnement, d'un support séparé, et le ressort de rappel étant fixé à une extrémité, directement ou par l'intermédiaire d'un câble ou d'un fil de transmission, au levier de pédale et, à l'autre extrémité, sur le support, caractérisé en ce que la fixation du ressort de rappel (22) s'effectue sur une paroi transversale (38), disposée entre les branches (15) du support (5), entre les branches (15) et la paroi transversale (38) étant prévues des fentes (39) pour assurer le guidage de fils à ressort munis de crochets, appartenant à des ressorts de rappel réalisés sous la forme de ressorts hélicoïdaux (22).

8. Ensemble de pédale d'accélérateur selon la revendication 7, caractérisé en ce que les crochets (23) des fils à ressort sont passés autour de bourrelets (40) appartenant à la paroi transversale (38).

9. Ensemble de pédale d'accélérateur selon la revendication 7 ou 8, caractérisé en ce que chaque fois un guidage (34) est disposé sur les faces intérieures des deux branches (15), et en ce que les guidages (15) sont inclinés obliquement, de manière à avoir sur le côté introduction un plus grand espacement par rapport au point d'action du ressort de rappel (22).

10. Ensemble de pédale d'accélérateur selon l'une des revendications 7 à 9, caractérisé en ce qu'au moins un ressort de rappel (22) est susceptible d'être accroché dans un oeillet (35) du coulisseau (33).

11. Ensemble de pédale d'accélérateur selon l'une des revendications 7 à 10, caractérisé en ce que le coulisseau (33) est muni, sur le côté opposé au côté d'introduction, d'un organe de liaison (36, 37), par l'intermédiaire duquel le coulisseau (33) est susceptible d'être relié de façon mobile au levier de pédale (3), avant sa liaison avec le support (5) et lorsque le ressort de rappel (22) est accroché.

12. Ensemble de pédale d'accélérateur selon l'une des revendications 7 à 11, caractérisé en ce que le ressort de rappel (22) est muni d'un câble ou d'un fil de transmission (10) dont l'extrémité libre est fixée dans la zone de la paroi périphérique extérieure de l'oeillet de tourillonnement (4), le câble ou le fil de transmission (10) étant guidé, depuis la zone périphérique extérieure de l'oeillet de tourillonnement (4), sur une fente périphérique partielle (8), à l'intérieur de l'oeillet de tourillonnement (4) d'où, après son enlacement, il ressort de nouveau de la même périphérique partielle ou d'une autre et est guidé sur une zone de l'oeillet de tourillonnement (4) du levier de pédale (3), réalisée sous la forme de came (13), la came (13) présentant une forme telle que, lors du passage sur elle du câble ou du fil de transmission (10), des bras de levier différents s'établissent sur la came (13) pour le câble ou le fil de transmission (10).

13. Ensemble de pédale d'accélérateur selon l'une des revendications 7 à 12, caractérisé en ce qu'entre le ressort de rappel (22) et le point de tourillonnement, est disposée une paroi à fentes (41) s'étendant transversalement entre les branches (15), paroi à fentes à travers les fentes (42) de laquelle est guidé le câble ou le fil de transmission (10).
